# EUROPÄISCHE PATENTANMELDUNG

(11) **EP 2 693 697 A1**
(43) Veröffentlichungstag der Anmeldung: **05.02.2014**
(21) Anmeldenummer: 13177609.8
(22) Anmeldetag: 23.07.2013
(51) Int. Cl.: H04L 12/28, H04L 29/08

(54) **Gesamtsystem der Gebäudesystemtechnik und/oder Türkommunikation**

(30) Priorität: 01.08.2012 DE 102012015275
(71) Anmelder: ABB AG, 68309 Mannheim (DE)
(72) Erfinder: Linde, Holger, 44137 Dortmund (DE); Platte, Jörg, 44149 Dortmund (DE); Kleine-Cosack, Christian, 44229 Dortmund (DE); Wegner, Tobias, 44147 Dortmund (DE)

(57) **Zusammenfassung**

Es wird ein Gesamtsystem (1) der Gebäudesystemtechnik und/oder Türkommunikation vorgeschlagen,
• mit einer Vielzahl von miteinander verbundenen Systemgeräten (3 - 11), welche jeweils mit einer Steuerungs- und Auswerteeinheit (19) und einer damit verbundenen Kommunikationskomponente (18) versehen sind,
• mit einer Vielzahl von Mobilgeräten (13 - 16), welche jeweils mit einer Kommunikationskomponente (22) versehen sind,
• wobei jeweils drahtlose Kommunikationskanäle (26 - 29) zwischen einer Kommunikationskomponente (22) mindestens eines Mobilgeräts (13 - 16) und einer Kommunikationskomponente (18) mindestens eines Systemgerät (3 - 11) geschaffen sind,
• wobei aktive Ortungskomponenten (20, 23) die Lokalisierung der Mobilgeräte (13 - 16) in der direkten Umgebung des Gesamtsystems (1) bewerkstelligen und
• wobei die Mobilgeräte (13 - 16) als aktive Sensoren in das Gesamtsystem (1) eingebunden sind.

## Beschreibung

Die Erfindung betrifft ein Gesamtsystem der Gebäudesystemtechnik und/oder Türkommunikation.

Systeme der Gebäudesystemtechnik und der Türkommunikation sind allgemein bekannt. Mobilgeräte respektive mobile Endgeräte, wie insbesondere Smartphones, Smartpads und Tablet-PCs, werden in unterschiedlichen Szenarien der Gebäudesystemtechnik eingesetzt. Primäre Aufgabe ist dabei das Bereitstellen einer graphischen Benutzerschnittstelle auf dem Mobilgerät zur Visualisierung von Daten, die von dem verbundenen System bereitgestellt werden, sowie die direkte Steuerung von Aktoren über das Mobilgerät. Typische Anwendungsfälle sind die detaillierte Anzeige des aktuellen Systemzustands, beispielsweise des aktuellen Energieverbrauchs oder die Steuerung der verschiedenen Gewerke eines Gebäudes, wie beispielsweise Beleuchtung und Raumtemperatur. Die in der Regel zu Grunde liegende IP-Technologie (Internet Protocol) erlaubt dem Benutzer zudem den mobilen Zugriff auf das zu steuernde System, und zwar sowohl lokal vor Ort als auch aus der Ferne über das Internet.

Der Erfindung liegt die Aufgabe zugrunde, ein optimiertes Gesamtsystem der Gebäudesystemtechnik und/oder Türkommunikation mit erweiterten Möglichkeiten anzugeben.

Diese Aufgabe wird erfindungsgemäß gelöst durch ein Gesamtsystem der Gebäudesystemtechnik und/oder Türkommunikation
- mit einer Vielzahl von miteinander verbundenen Systemgeräten, welche jeweils mit einer Steuerungs- und Auswerteeinheit und einer damit verbundenen Kommunikationskomponente versehen sind,
- mit einer Vielzahl von Mobilgeräten, welche jeweils mit einer Kommunikationskomponente versehen sind,
- wobei jeweils drahtlose Kommunikationskanäle zwischen einer Kommunikationskomponente mindestens eines Mobilgeräts und einer Kommunikationskomponente mindestens eines Systemgerät geschaffen sind,
- wobei aktive Ortungskomponenten die Lokalisierung der Mobilgeräte in der direkten Umgebung des Gesamtsystems bewerkstelligen und
- wobei die Mobilgeräte als aktive Sensoren in das Gesamtsystem eingebunden sind.

Der Erfindung liegt die Idee zugrunde, Mobilgeräte wie Smartphones, Smartpads und Tablet-PCs als aktive Sensoren in das Gesamtsystem der Gebäudesystemtechnik und/oder Türkommunikation einzubinden. Die fest installierte Sensorik respektive die Systemgeräte des Gesamtsystems wird/werden auf diese Weise nicht nur dynamisch erweitert, sondern auch um personenspezifische Daten respektive Benutzerdaten ergänzt. Diese Erweiterung ermöglicht die Realisierung einer Vielzahl neuer Anwendungsfälle. Typische Mobilgeräte sind ausgerüstet mit einer Vielzahl von Technologien zur Kommunikation, wie beispielsweise WiFi, Bluetooth, Infrarot IR, Telefonie, Ortung wie insbesondere GPS (Global Positioning System), Bewegungserkennung (Beschleunigungssensor) und Bildaufnahme. Zudem liefern der aktuelle Systemzustand des Mobilgerätes, beispielsweise "Stand-By", "Musik hören", "Video sehen", "Lesen", "Spielen" sowie die aktuellen Benutzerdaten des Mobilgerätes, beispielsweise Termineinträge im Kalender, wertvolle Informationen über das aktuelle Verhalten des Benutzers. Diese Informationen werden dem Gesamtsystem der Gebäudesystemtechnik und/oder Türkommunikation vorteilhaft zur Verwendung zur Verfügung gestellt. Hierdurch ist die Realisierung komplexer, kontextabhängiger Funktionen möglich. Des Weiteren ist hierdurch ein intelligentes, benutzerabhängiges Verhalten des Gesamtsystems der Gebäudesystemtechnik und/oder Türkommunikation möglich.

Gegebenenfalls können Mobilgerät und Systemgerät über einen gemeinsamen Zugangspunkt, insbesondere einen WLAN-Access-Point, verbunden sein.

Die Ortung der Mobilgeräte kann dabei alternativ auf unterschiedliche Art und Weise erfolgen:
- Bei einer aktiven Ortung senden die Mobilgeräte ihre aktuellen Positionsdaten aktiv an die Steuerungs- und Auswerteeinheiten der Systemgeräte.
- Bei einer passiven Ortung nutzen die Steuerungs- und Auswerteeinheiten der Systemgeräte ihre Kommunikationskomponenten für die Ermittlung der aktuellen Positionsdaten der Mobilgeräte.

Das Einbinden der Mobilgeräte als aktive Sensoren in das Gesamtsystem erfolgt beispielsweise,
- indem die Mobilgeräte den Systemgeräten personenspezifische Daten und individuelle benutzerabhängige Präferenzen übermitteln und/oder
- indem die Systemgeräte personenspezifische Daten und/oder individuelle benutzerabhängige Präferenzen zur Steuerung nutzen, abhängig von Ortsund Kontextinformationen und/oder
- indem die Mobilgeräte den Systemgeräten ihren aktuellen Zustand übermitteln und/oder
- indem eine Datenverarbeitungskomponente eines Mobilgerätes regelt, welche Daten vom Mobilgerät an das Gesamtsystem übertragen werden.

In weiterer Ausgestaltung übermitteln die Systemgeräte kontextabhängig den Mobilgeräten Nachrichten betreffend relevanter Zustände des Gesamtsystems.

Die Erfindung wird nachstehend an Hand der in der Zeichnung dargestellten Ausführungsbeispiele erläutert. Es zeigen:
- Fig. 1: ein Gesamtsystem der Gebäudesystemtechnik und/oder Türkommunikation inklusive der als aktive Sensoren eingesetzten Mobilgeräte,
- Fig. 2: ein Ausführungsbeispiel mit aktiver Ortungskomponente auf dem Mobilgerät,
- Fig. 3: ein Ausführungsbeispiel für eine passive Ortung.

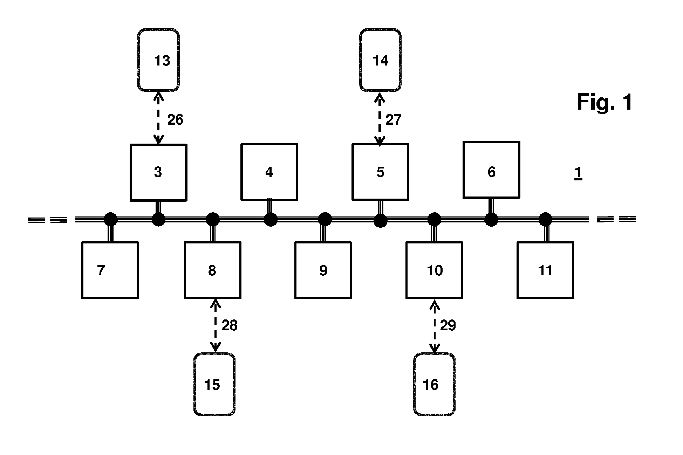

In Fig. 1 ist ein Gesamtsystem der Gebäudesystemtechnik und/oder Türkommunikation inklusive der als aktive Sensoren eingesetzten Mobilgeräte dargestellt. Es ist ein Gesamtsystem der Gebäudesystemtechnik und/oder Türkommunikation inklusive der als aktive Sensoren eingesetzten Mobilgeräte zu erkennen, wobei das Gesamtsystem 1 beispielsweise gebildet wird
- aus (beispielsweise) neun Systemgeräten 3, 4, 5, 6, 7, 8, 9, 10, 11, welche an einen gemeinsamen Bus, beispielsweise gemäß dem Konnex-Standard, angeschlossen sind,
- aus (beispielsweise) vier Mobilgeräten 13 bzw. 14 bzw. 15 bzw. 16, welche über drahtlose Kommunikationskanäle 26 bzw. 27 bzw. 28 bzw. 29 mit den Systemgeräten 3 bzw. 5 bzw. 8 bzw. 10 kommunizieren.

Bei den Systemgeräten 3, 4, 5, 6, 7, 8, 9, 10, 11 kann es sich beispielsweise um Bewegungsmelder, Präsenzmelder, Temperaturfühler, Raumtemperaturregler, Schaltaktoren für Beleuchtungen, Dimmaktoren für Beleuchtungen, Jalousieaktoren, Zeitschaltuhren, Rauchmelder, Dämmerungsschalter, Türkommunikations-Geräte usw. handeln. Selbstverständlich sind beliebig andere Ausführungsformen eines Gesamtsystems 1 mit beliebig vielen Systemgeräten, mit beliebig vielen Mobilgeräten und mit beliebiger Kommunikation zwischen einem Mobilgerät und einem Systemgerät denkbar, d. h. das Ausführungsbeispiel gemäß Fig. 1 stellt lediglich ein Beispiel aus einer Vielzahl möglicher Konfigurationen dar. Selbstverständlich ist das Gesamtsystem 1 sehr flexibel im Hinblick auf die aktuell eingebundenen Mobilgeräte 13 - 16, d. h. die Anzahl der aktuell eingebundenen Mobilgeräte 13 - 16.

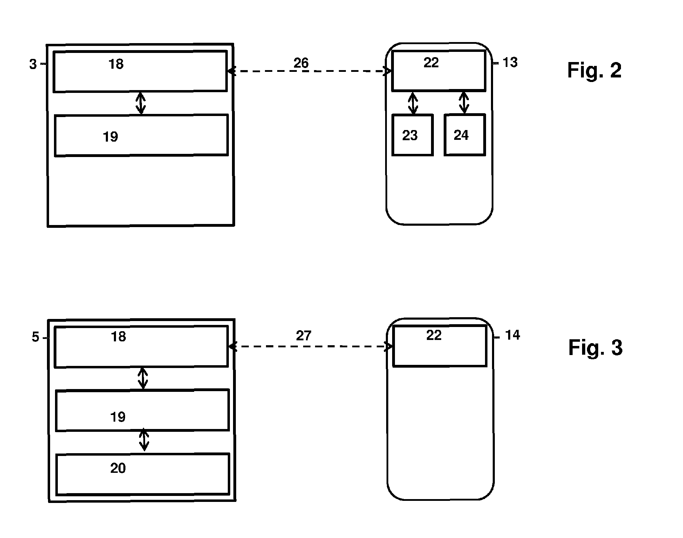

In Fig. 2 ist ein Ausführungsbeispiel mit aktiver Ortungskomponente auf dem Mobilgerät dargestellt. Das gezeigte Systemgerät 3 weist eine Steuerungs- und Auswerteeinheit 19 auf, welche mit einer Kommunikationskomponente 18 (drahtlose Kommunikationsschnittstelle) verbunden ist. Das gezeigte Mobilgerät 13 weist eine Kommunikationskomponente 22 (drahtlose Kommunikationsschnittstelle) auf, welche mit einer aktiven Ortungskomponente 23 und mit einer Datenverarbeitungskomponente 24 verbunden ist. Die beiden Kommunikationskomponenten 18 und 22 kommunizieren über den drahtlosen Kommunikationskanal 26.

In Fig. 3 ist ein Ausführungsbeispiel für eine passive Ortung dargestellt. Das gezeigte Systemgerät 5 weist wiederum die Steuerungs- und Auswerteeinheit 19 auf, welche mit der Kommunikationskomponente 18 (drahtlose Kommunikationsschnittstelle) verbunden ist. Zusätzlich ist eine aktive Ortungskomponente 20 vorgesehen, welche mit der Steuerungs- und Auswerteeinheit 19 verbunden ist. Das gezeigte Mobilgerät 14 weist wiederum die Kommunikationskomponente 22 (drahtlose Kommunikationsschnittstelle) auf. Die beiden Kommunikationskomponenten 18 und 22 kommunizieren über den drahtlosen Kommunikationskanal 27.

Wie bereits eingangs erwähnt, liegt der Erfindung die Idee zugrunde, Mobilgeräte 13, 14, 15, 16 als aktive Sensoren in das Gesamtsystem 1 der Gebäudesystemtechnik und/oder Türkommunikation einzubinden. Die fest installierte Sensorik des Gesamtsystems 1, d. h. die Systemgeräte 3-11, wird/werden auf diese Weise zum Einen dynamisch erweitert, und zum Anderen auch um personenspezifische Daten respektive Benutzerdaten ergänzt. Diese Erweiterung ermöglicht die Realisierung einer Vielzahl neuer Anwendungsfälle, welche nachfolgend im Detail betrachtet werden.

Ein erster neuer Anwendungsfall besteht in der verbesserten Erkennungsleistung von Ereignissen durch Datenfusion von lokaler Sensorik in Form der Systemgeräte 3 - 11 und mobiler Sensorik in Form der Mobilgeräte 13 - 16 / Kontextinformation. Beispielsweise wird ein typischer Infrarot-basierter Präsenzmelder als Systemgerät 3 - 11 systembedingt stets auf Bewegungen im Raum angewiesen sein. Bleiben diese Bewegungen aus, so würde der Präsenzmelder dem System die Abwesenheit von Personen melden, obwohl sich diese noch im Raum aufhalten und folglich würde der Präsenzmelder beispielsweise die Beleuchtung ausschalten. Diese ungewünschten Situationen treten in aktuellen Systemen gehäuft auf, beispielsweise während der Benutzer längere Zeit liest oder Musik hört. Meldet jedoch das Mobilgerät 13 - 16 als mobile Sensorik dem Präsenzmelder als lokale Sensorik respektive Systemgerät 3-11 seinen aktuellen Zustand, beispielsweise "Lese-Modus", so kann der Präsenzmelder als Systemgerät 3-11 diese Information in seinem Regelkreis berücksichtigen und wird in dem beschrieben Beispiel die Beleuchtung je nach benutzerseitiger Vorgabe/Einstellung entweder gar nicht oder erst nach einer sehr viel längeren Zeitspanne ohne Bewegungserkennung ausschalten.

Ein zweiter neuer Anwendungsfall ist in einem "Benutzeradaptivem Verhalten" zu sehen. Unterschiedliche Benutzer stellen vielfach unterschiedliche Anforderungen an die Umgebungsbedingungen, beispielsweise an die gewünschte Beleuchtung und/oder an die gewünschte Raumtemperatur. Allgemein bekannte Systeme der Gebäudesystemtechnik können diese individuellen, benutzerabhängigen Präferenzen jedoch nicht berücksichtigen, da entsprechende Informationen über anwesende Personen fehlen. Durch die Einbindung benutzerspezifischer Mobilgeräte 13 - 16 in das Gesamtsystem 1 stehen diese Informationen nun zur Verfügung und die Raumtemperatur und/oder die Beleuchtung können über die zugeordneten Systemgeräte 3-11 beispielsweise nicht nur abhängig von An- oder Abwesenheit von Personen im Allgemeinen, sondern personenspezifisch gemäß individueller, benutzerabhängiger Präferenzen geregelt werden.

Ein dritter neuer Anwendungsfall besteht in der Realisierung kontextabhängiger Funktionen auf Basis von Benutzer- und Ortsinformationen. Ortet das Gesamtsystem 1 über ein Mobilgerät 13-16 einen bestimmten Benutzer, beispielsweise auf Basis der Ortungsdaten des Mobilgeräts 13-16, und ist dieser bestimmte Benutzer im Gesamtsystem 1 registriert, so kann das Gesamtsystem 1 automatisch die Raumtemperaturregelung an die Präferenzen des Benutzers anpassen, sobald sich dieser dem Haus nähert.

Ein anderer Anwendungsfall ist die kontextabhängige automatische Benachrichtigung des Benutzers über Zustände des Gesamtsystems 1. Abhängig von der Nachricht kann eine sogenannte "Push-Notification" erfolgen, falls sich der Benutzer nicht vor Ort befindet, oder auch gerade, weil sich der Benutzer direkt vor Ort befindet. Beispielsweise möchte ein Benutzer nur über geöffnete Fenster benachrichtigt werden, wenn er das Haus verlässt und nicht, wenn er sich noch im Haus aufhält.

Wie aus den vorstehenden Ausführungen bereits zu erkennen ist, basiert das beschriebene Gesamtsystem 1 auf einer oder mehreren der wesentlichen Systemkomponenten, aktiven Ortungskomponenten 20 und 23, Kommunikationskomponenten 18 und 22, Steuerungs- und Auswerteeinheit 19 und Datenverarbeitungskomponente 24, auf welche nachfolgend näher eingegangen wird.

Die aktiven Ortungskomponenten 20 oder 23 ermöglichen die Lokalisierung des Mobilgeräts 13 - 16 in der direkten Umgebung des Gesamtsystems 1. Die physikalische Ortung erfolgt auf Basis verschiedener Funk-Technologien, beispielsweise WiFi oder Bluetooth oder NFC. Wie bereits erwähnt kann die Ortung dabei passiv oder aktiv erfolgen. Bei der aktiven Ortung sendet das Mobilgerät 13-16 seine Positionsdaten aktiv an die Steuerungs- und Auswerteeinheit 18 des Systemgeräts 3 - 11. Bei der passiven Ortung nutzt die Steuerungs- und Auswerteeinheit 19 des Systemgeräts 3-11 die Kommunikationskomponente 18, um Informationen über den aktuellen Aufenthalt des Mobilgerätes 13 - 16 zu bekommen. Hier ist beispielsweise ein Bluetooth-Scan möglich oder der Versuch, die bekannte MAC-Adresse (Media-Access-Control-Adresse) des Mobilgeräts 13 - 16 im Netzwerk zu finden. In beiden Fällen muss das Mobilgerät 13-16 nicht modifiziert werden um als Sensor des Gesamtsystems 1 genutzt werden zu können.

Die Kommunikationskomponenten 18 und 22 stellen die Kommunikationsverbindung zwischen dem Mobilgerät 13-16 und dem Gesamtsystem 1 her und ermöglichen den Austausch von Kontext- und Sensorinformationen. Diese Verbindungen erfolgen auf Basis der IP Technologie (Internet Protocol).

Die dem Gesamtsystem 1 zur Verfügung stehenden Daten werden von der Steuerungs- und Auswerteeinheit 19 ausgewertet und das Verhalten des Gesamtsystems 1 bestimmt.

Die Datenverarbeitungskomponente 24 regelt, welche Daten vom Mobilgerät 13 - 16 über die Kommunikationskomponenten 18 und 22 an das Gesamtsystem 1 übertragen werden.

### Bezugszeichenliste

- 1: Gesamtsystem der Gebäudesystemtechnik und/oder Türkommunikation inklusive der als aktive Sensoren eingesetzten Mobilgeräte
- 2: -
- 3: Systemgerät
- 4: Systemgerät
- 5: Systemgerät
- 6: Systemgerät
- 7: Systemgerät
- 8: Systemgerät
- 9: Systemgerät
- 10: Systemgerät
- 11: Systemgerät
- 12: -
- 13: Mobilgerät
- 14: Mobilgerät
- 15: Mobilgerät
- 16: Mobilgerät
- 17: -
- 18: Kommunikationskomponente des Systemgeräts
- 19: Steuerungs- und Auswerteeinheit
- 20: Aktive Ortungskomponente
- 21: -
- 22: Kommunikationskomponente des Mobilgeräts
- 23: Aktive Ortungskomponente
- 24: Datenverarbeitungskomponente
- 25: -
- 26: Drahtloser Kommunikationskanal
- 27: Drahtloser Kommunikationskanal
- 28: Drahtloser Kommunikationskanal
- 29: Drahtloser Kommunikationskanal

## Patentansprüche

1. Gesamtsystem (1) der Gebäudesystemtechnik und/oder Türkommunikation
• mit einer Vielzahl von miteinander verbundenen Systemgeräten (3 - 11), welche jeweils mit einer Steuerungs- und Auswerteeinheit (19) und einer damit verbundenen Kommunikationskomponente (18) versehen sind,
• mit einer Vielzahl von Mobilgeräten (13-16), welche jeweils mit einer Kommunikationskomponente (22) versehen sind,
• wobei jeweils drahtlose Kommunikationskanäle (26 - 29) zwischen einer Kommunikationskomponente (22) mindestens eines Mobilgeräts (13-16) und einer Kommunikationskomponente (18) mindestens eines Systemgerät (3 - 11) geschaffen sind,
• wobei aktive Ortungskomponenten (20, 23) die Lokalisierung der Mobilgeräte (13 - 16) in der direkten Umgebung des Gesamtsystems (1) bewerkstelligen und
• wobei die Mobilgeräte (13-16) als aktive Sensoren in das Gesamtsystem (1) eingebunden sind.

2. Gesamtsystem (1) nach Anspruch 1, **dadurch gekennzeichnet, dass** Mobilgerät (13-16) und Systemgerät (3-11) über einen gemeinsamen Zugangspunkt, insbesondere einen WLAN-Access-Point, verbunden sind.

3. Gesamtsystem nach Anspruch 1 oder 2, **dadurch gekennzeichnet, dass** bei einer aktiven Ortung die Mobilgeräte (13-16) ihre aktuellen Positionsdaten aktiv an die Steuerungs- und Auswerteeinheiten (19) der Systemgeräte (3 - 11) senden.

4. Gesamtsystem (1) nach Anspruch 1 oder 2, **dadurch gekennzeichnet, dass** bei einer passiven Ortung die Steuerungs- und Auswerteeinheiten (19) der Systemgeräte (3 - 11) ihre Kommunikationskomponenten (18) für die Ermittlung der aktuellen Positionsdaten der Mobilgeräte (13-16) nutzen.

5. Gesamtsystem (1) nach einem der vorstehenden Ansprüche, **dadurch gekennzeichnet, dass** die Mobilgeräte (13-16) den Systemgeräten (3-11) personenspezifische Daten und individuelle benutzerabhängige Präferenzen übermitteln.

6. Gesamtsystem (1) nach einem der vorstehenden Ansprüche, **dadurch gekennzeichnet, dass** die Systemgeräte (3-11) personenspezifische Daten und/oder individuelle benutzerabhängige Präferenzen zur Steuerung nutzen, abhängig von Ortsund Kontextinformationen.

7. Gesamtsystem (1) nach einem der vorstehenden Ansprüche, **dadurch gekennzeichnet, dass** die Mobilgeräte (13 - 16) den Systemgeräten (3-11) ihren aktuellen Zustand übermitteln.

8. Gesamtsystem (1) nach einem der vorstehenden Ansprüche, **dadurch gekennzeichnet, dass** eine Datenverarbeitungskomponente (24) eines Mobilgerätes (13 - 16) regelt, welche Daten vom Mobilgerät (13 - 16) an das Gesamtsystem (11) übertragen werden.

9. Gesamtsystem (1) nach einem der vorstehenden Ansprüche, **dadurch gekennzeichnet, dass** die Systemgeräte (3-11) kontextabhängig den Mobilgeräten (13 - 16) Nachrichten betreffend relevante Zustände des Gesamtsystems (1) übermitteln.
